# EUROPEAN PATENT SPECIFICATION

(11) **EP 4 196 439 B1**
(45) Date of publication and mention of the grant of the patent: **25.09.2024**
(21) Application number: 21756079.6
(22) Date of filing: 17.08.2021
(51) Int. Cl.: C01B 17/02, B01D 53/00, B01D 53/52, B01D 53/86, B01J 19/24, C01B 17/04

(54) **DEEP COOLER**
TIEFKÜHLER
REFROIDISSEUR PROFOND

(30) Priority: 17.08.2020 NL 2026277
(43) Date of publication of application: 21.06.2023
(73) Proprietor: Worley Nederland B.V., 2595 AN 's-Gravenhage (NL)
(72) Inventor: VAN WARNERS, Anne, 2595 AN 's-Gravenhage (NL); ROELOFS, Tobias, 2595 AN 's-Gravenhage (NL)
(74) Representative: V.O.
(86) International application number: PCT/NL2021/050508
(87) International publication number: WO 2022/039592

(56) References cited:
- EP-A1- 0 666 104
- US-A- 5 807 410
- US-A- 5 897 850
- US-A1- 2018 021 693

## Description

The invention is in the field of removing elemental sulfur from a gas stream. In particular, the invention is directed to cooling the gas stream below the solidification temperature of elemental sulfur such that sulfur can selectively be removed from the gas stream.

Certain gas streams, for instance tail gas streams from the Claus process, contain elemental sulfur that should be removed as much as possible to reduce overall sulfur emissions. Typically, tail gas processes such as Superclaus or amine-based tail gas treatment units (TGTU) use sulfur condensation at temperatures around 130 °C to remove elemental sulfur vapor. Any sulfur species (*e.g.* SO₂) in the tail gas may also be converted back to H₂S in a hydrogenation reactor before absorption and/or recycling it back to the front of the process (*e.g*. Claus process). Alternatively to these conventional processes, elemental sulfur can be solidified (typically sublimed) by cooling the gas stream containing the elemental sulfur (herein also referred to as sulfur-containing gas stream). Examples of such processes and the heat exchanger that can therein be used are described in US5807410 and US5897850.

US5807410 and US5897850 describe processes that are generally based on leading the gas stream through tubes of a shell and tube heat exchanger to cool the gas stream to a temperature well below the solidification temperature. To facilitate removal of the solidified sulfur from the heat exchanger, the heat exchanger can be placed at a slant or vertically to make use of gravity once the sulfur come falling off. However, the anticipate shrinkage of the solidified sulfur that was believed to result in the sulfur come falling off did not take place.

In addition, the conventional processes were found to suffer from operations below the water dewpoint due to a poor control of the temperature of the cooling air used. This in turn led to high corrosion rates in the presence of Claus tail gas. Moreover, plugging of the inlet of the tubes as a result of cold tube sheet was observed. Typically, more than half of the tube inlets were obstructed by frozen solid sulfur, increasing the overall velocity through the remaining tubes. Furthermore, the high velocity of the gas stream resulted in a thick and dense layer of solid sulfur which was difficult to remove. Finally, regeneration of the heat exchanger (*i.e.* removal of solidified sulfur from one or more tubes) was performed online via heating of the entire shell. This resulted in a temporary much lower sulfur removal rate.

Shell and tube heat exchangers for the removal of substances capable of subliming are also known in other fields. For example, although not directly applicable and not directly related to the recovery of sulfur, a discontinuously operating desublimator based on a shell and tube configuration has been described in US 2018/0021693 for the sublimation of phthalic anhydride. A drawback of the apparatus described in US 2018/0021693 is that it must be operated in a discontinuous manner, meaning that it is operated by a loading phase and an unloading phase. During the unloading phase, the loading phase is discontinued and no recovered product can temporarily be recovered. This negatively influences the process efficiency.

EP0666104 discloses an apparatus comprising a reactor wherein at least in a first zone a plurality of heat exchange means are present. The heat exchange means comprise a tube formed by at least one duct. Notably, the purpose of EP0666104 to minimize the deposition of insulating coke on the heat exchange means is contrasting with the purpose of the present invention to deposit solid elemental sulfur on the heat exchange means.

An object of the present invention is to provide an improved process and an improved apparatus for the removal of elemental sulfur from a sulfur-containing gas stream that addresses at least one or more of the above-mentioned drawbacks.

Surprisingly, the present inventors found that maintaining a laminar flow of the sulfur-containing gas stream through the shell and tube heat exchanger results in improved removal of sulfur. This is particularly surprising because in other recovery processes, laminar flow gives generally poorer results than turbulent flows; in line with the common theory and observations on mass transfer rates in other systems that generally show an increase in mass transfer coefficient and rates by reaching or improving the turbulence of the system. However, for the present process, a laminar flow was found to lead to much higher sulfur removal.

In addition, the present inventors surprisingly found that maintaining the laminar flow of the sulfur-containing gas stream in accordance with the invention results in a more favourable form of the solidified sulfur, namely in a needle-type crystal structure. This favourable form allows easier removal of the solidified sulfur from the heat exchanger by melting of the crystals. In contrast, in the processes using a turbulent gas stream as described in US5807410 and US5897850, thick and dense solid sulfur cakes are typically formed which are more difficult to remove by melting because an insulating layer is formed during this removal.

Accordingly, in one aspect, the present invention is directed to a process for the recovery of elemental sulfur from a sulfur-containing gas stream comprising leading said sulfur-containing gas stream (herein also referred to as the gas stream) over a flow path through a shell and tube heat exchanger and cooling said stream to a temperature below the solidification temperature of elemental sulfur to obtain solidified elemental sulfur, wherein said sulfur-containing gas stream is lead over the flow path with a flow that is essentially laminar over essentially the entire length of the flow path.

Flow patterns such as laminar and turbulent flow can be described with the Reynolds number. The flow pattern and the Reynolds number can be influenced by various process parameters and equipment choices such as the design of the shell and tube heat exchanger and the flow velocity as further detailed herein.

In a further aspect, the present invention is directed to an apparatus for the recovery of elemental sulfur.
Figure 1 illustrates an apparatus according to a preferred embodiment of the invention.
Figure 2 illustrates an apparatus having a section in unloading mode and multiple sections in loading mode according to a preferred embodiment of the invention.

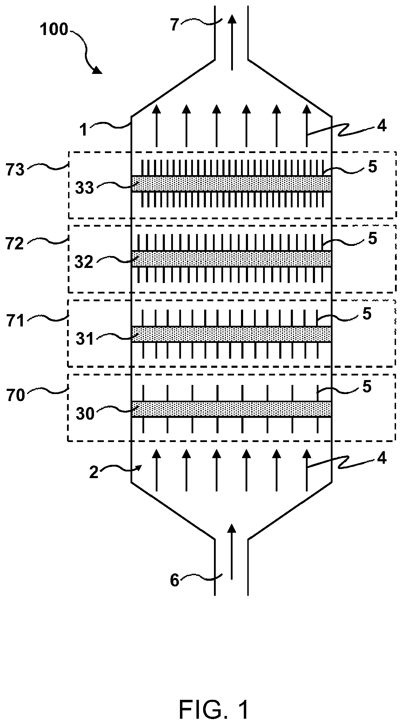

As illustrated in figure 1, the apparatus comprises a shell and tube heat exchanger (100) that comprises a shell (1) defining a recovery chamber (2) and one or more tubes (30-33) for leading a cooling fluid through wherein the tubes (30-33) are positioned substantially parallel in the recovery chamber (2). Further, the shell and tube heat exchanger (100) comprises a gas inlet (6) and gas outlet (7) that allow the respective in- and outflow of the gas stream. In the heat exchanger is further provided a flow path (4) in between the gas in- and outlets for a sulfur-containing stream. The flow path (4) is provided around the tubes (30-33).

To have a sufficiently large cooling surface on which the elemental sulfur can solidify, the tubes preferably comprise a cooling surface area that is at least in part formed by outwardly extending projections (5) which are extending away from the tube into the flow path of the of the sulfur-containing gas stream in the recovery chamber. In general, the projections are extending perpendicular from the surface of the tubes. The projections can be given various shapes such as for examples fins (*e.g.* straight fins, waffled fins and/or curved fins), spikes, rods and the like. The shape of the projections can be selected such to optimize the sulfur recovery yield. For each tube, the projections can independently be absent or present, and if present on a tube the projections can have different shapes over the length of the tube. In a particular embodiment, all projections are essentially similarly shaped. Moreover, the projections can form a bridge between two or more tubes.

Preferably, the cooling surface area increases over the length of the flow path. It was found that by an incremental cooling surface area, an adequate sulfur removal can be provided as well as a good distribution of the sulfur load over the various tubes. By increasing the cooling surface area and concomitantly the removal efficiency, the decreasing concentration of sulfur and thus driving force for mass transfer in the gas flow can be compensated.

Increasing the cooling surface area can be achieved in various means. For example, the density of the cooling tubes in the recovery chamber can be increased or the density or number of the outwardly extending projections per surface area of the tubes can increase over the length of the flow path. The length of the projections can also be increased. In a preferred embodiment, the density of the projections increases with the flow path. For example, the amount of projections (5) increases for each tube (30-33) following the direction of the flow path (4). In even more concrete terms, a first tube (30) can have less projections (5) than the subsequent tubes (31-33), as illustrated in figure 1.

Further, as also illustrated in figure 1, the apparatus according to the present invention is preferably configured such that the shell and tube heat exchanger comprises two or more sections (70-73) in the flow direction of the flow path. Each of these sections comprises a part of the recovery chamber and one or more tubes. The apparatus is further configured such that the tubes in each section can independently from other sections contain and lead a cooling fluid or a heating fluid. If a tube is leading a cooling fluid, this tube is capable of recovering sulfur from the gas stream, while if the tubes is leading a heating fluid, the tube is capable of unloading sulfur from the section in which the tube is positioned. Accordingly, by enabling independently operating the sections, the apparatus can be operated in a continuous manner.

As described herein-above, the sulfur-containing gas stream flows essentially laminar over essentially the entire length of the flow path. Flow patterns of a flowing stream can be expressed with Reynolds number. For the present process, the Reynolds number is preferably less than 2000, more preferably less than 1800, even more preferably less than 1500, even more preferably less than 1000, most preferably less than 500. It was surprisingly found that a decreasing Reynolds number corresponds with an increasing yield. This is an uncommon finding in the art.

Maintaining a laminar flow in accordance with the present invention can be achieved by choosing the appropriate process parameters and the appropriate apparatus setup. One of these parameters is the gas velocity of the sulfur-containing gas stream over the flow path. By keeping this velocity sufficiently low, the gas flow pattern can be maintained essentially laminar. However, the gas velocity should also not be too low as to be detrimental to the process efficiency and/or economic viability because the too low gas velocities require a too big and uneconomical shell to maintain a certain process efficiency. Therefore, in preferred embodiments, the sulfur-containing gas stream over the flow path has a gas velocity in the range of 0.05 to 5 m/s, preferably 0.1 to 1 m/s.

Moreover, carrying out the process in the apparatus as described herein, has a positive effect on the flow pattern and the process. Accordingly, the process is preferably carried out in the shell and tube heat exchanger that comprises the shell defining a recovery chamber and tubes through which a cooling fluid is lead and wherein said flow path of the said sulfur-containing gas stream is located in said recovery chamber around said tubes. Moreover, the tubes are preferably positioned substantially parallel to each other and which longitudinal direction is essentially perpendicular to the flow path of the sulfur-containing gas stream in the recovery chamber.

To solidify the sulfur in the sulfur-containing gas stream, the stream is typically cooled in the shell and tube heat exchanger to a temperature in between the dew point of water and the solidification temperature of elemental sulfur. This temperature avoids condensation of water, which in typical applications results in excessive corrosion rates, and allows the crystallization of sulfur in high purity. The temperature preferably allows for sufficient mass transfer driving force. In this respect, preferable temperatures at atmospheric pressure generally lie between 90 °C and 114.9 °C, more preferably between 100 °C and 110 °C, most preferably between 100 °C and 105 °C. It was found that the temperature may directly influence the efficiency of the process. In particular, the difference between the temperature of the entering sulfur-containing gas stream and the temperature to which it is cooled in the shell and tube heat exchanger may influence the efficiency. Generally, a larger temperature difference allows for a higher efficiency. However, care can be taken to keep the cooling temperature from reaching the water dew point of the process gas.

Cooling of the gas stream is achieved by the cooling fluid flowing through the tubes in the shell and tube heat exchanger. The cooling fluid can in principle be any type of suitable fluid, such as water, steam, alcohol-containing liquids, air, and the like. Cooling the gas stream results in loading of the heat exchanger with solidified sulfur. To increase the effectiveness of the cooling liquid, the tubes comprise a cooling surface area that is at least in part formed by outwardly extending projections, preferably fins, that are extending away from the tube into the flow path of the of the sulfur-containing gas stream in the recovery chamber, as described herein-above. Moreover, as detailed above, the cooling surface area preferably increases over the length of the flow path. This can be achieved by increasing the number of the outwardly extending projections over the length of the flow path.

Notwithstanding the embodiments wherein the tubes can also be used to transport a heating fluid, it is preferred that the cooling is carried out at essentially the same temperature throughout the shell and tube heat exchanger. In other words, it is preferred that the cooling fluid in all tubes in the recovery chamber is maintained at essentially the same temperature with a tolerable deviation of ± 10 °C, preferably ± 5 °C.

When a tube or set of tubes is loaded with solidified sulfur, the tubes can be used to unload the sulfur. To this end, the heating fluid can be led through the tubes. The heating fluid can be any type of suitable fluid. Low-pressure steam or hot oil are for example suitable. Accordingly, the process can comprise a loading mode and/or an unloading mode.

In the unloading mode, the heating fluid typically has a temperature above 120 °C, preferably above 130 °C such as about 150 °C. At these temperatures, the solidified sulfur melts into liquid sulfur which detaches from the cooling surface area at which it had solidified. The liquid sulfur can then be led as a liquid sulfur stream out of the recovery chamber. Alternatively or additionally, the solidified sulfur may detach from the cooling surface area at which it had solidified by gravitational forces after which it may be recovered out of the recovery chamber.

To enable carrying out the loading and unloaded modes simultaneously, in preferred embodiments, the said shell and tube heat exchangers comprises two or more sections in the flow direction of the flow path. As such, in each section independently, the cooling fluid or the heating fluid to liquify solidified elemental sulfur flows can be controlled. Every section comprises a part of the recovery chamber and a tube or set of tubes. Advantageously, in preferred embodiments, the temperature of the heating stream when used in one or more sections is not too high in order to not be detrimental to the cooling capability of other sections that are still being in the loading mode. As such, the heating fluid is preferably kept below 200 °C. However, additional measures such as heat insulation between the sections (*e.g.* by sufficient spacing) can be taken to limit the effect of unloading a section on a section that is being loaded.

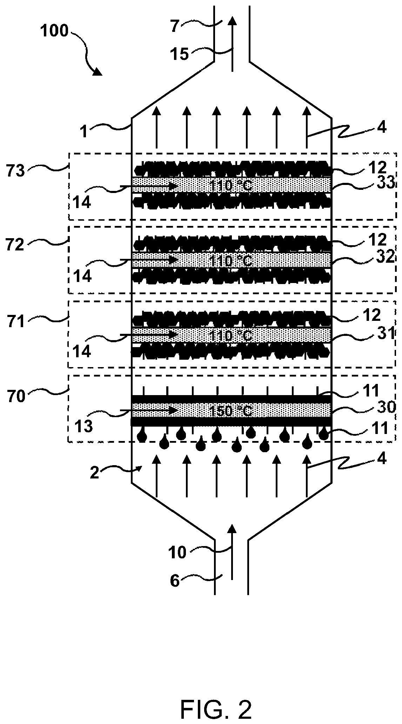

In figure 2, a preferred embodiment of the process in accordance with the present invention is illustrated. In the shell and tube heat exchanger as illustrated in figure 1, the sulfur-containing gas stream (10) enters through the inlet (6) after which it continues over the flow path (4) through the recovery chamber. In figure 2, the first section (70) is in unloading mode, as the heating fluid (13) is led at 150 °C through the tube (30). In this section (70), the sulfur (11) is liquid and detaching from the tube (30). The other sections (71-73) are in loading mode, as the cooling fluid (14) is led at 110 °C through the respective tubes (31-33). Solidified sulfur (12) at loaded on the surface area of these tubes (31-33). Further, as illustrated in figure 2, a sulfur-lean gas stream (15) is exiting the shell and tube heat exchanger through outlet (7).

The present process provides recovered sulfur and a sulfur-lean gas stream. The amount of sulfur present in the sulfur-containing gas stream is typically in the range of 50 to 2000 ppmv. After the sulfur has been recovered from this gas stream, the sulfur-lean gas stream typically contains 10 to 25 ppmv sulfur.

The present process can be carried out to remove elemental sulfur from basically any type of vent gasses from the sulfur degassing and/or storage sections. The present process can be particularly advantageously carried out on a tail gas stream originating from said Claus plant. Accordingly, it is preferred to position the shell and tube heat exchanger in accordance with the invention after a Claus plant.

As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features.

The present invention can be illustrated with the following nonlimiting examples.

### Examples

### Example 1

In a shell and tube heat exchanger, a preheated inlet gas stream of N₂ saturated with elemental sulfur at a temperature between 160 - 200°C was passed over a tube bundle of 30 finned tubes constructed in 15 rows in series with a total height of 50 cm. The tube wall temperature was kept at 100 °C by cooling oil. The fins had a height of 5.2 mm and were constructed with 4 fins per 2.54 cm of tube. The gas stream leaving the tube bundle was routed to a number of cold traps to solidify any remaining sulfur present. Total run time of the system was 6 hours. The impact of velocity on the systems performance was assessed by changing the nitrogen flow rate.

Via gravimetric analysis the mass balance over the system could be established allowing determination of the sulfur removal. The results are shown in Table 1.

**Table 1**

| Velocity | Reynolds | Sulfur Feed | Sulfur Collected in Traps | Sulfur Removal [%] |
|---|---|---|---|---|
| [m/s] | [ - ] | [gram] | [gram] | |
| 0.06 | 14 | 126.0 | 0 * | 100* |
| 0.14 | 34 | 164.4 | 5.2 | 96.8 |
| 0.61 | 146 | 345.6 | 99.2 | 71.3 |

| | | | | |
|---|---|---|---|---|
| *Not detected | | | | |

### Example 2

The experiment of Example 1 was repeated with a tube bundle containing 18 finned tubes constructed in 9 rows in series with a total height of 30 cm. The fin density was increased to 8 fins per 2.54 cm the fins extending at a similar height of 5.2 mm as in Example 1. By lowering the tube count, the heat exchange area was kept identical to the set-up of Example 1.

Via gravimetric analysis the mass balance over the system could be established allowing determination of the sulfur removal.

The results are shown in Table 2.

**Table 2**

| Velocity | Reynolds | Tube density Fins per inch | Sulfur Removal [%] |
|---|---|---|---|
| [m/s] | [ - ] | [-] | |
| 0.10 | 12 | 8 | 88.3 |
| 0.61 | 73 | 8 | 76.4 |

The test result from Example 1 and 2 illustrate the positive impact of lowering the velocity with respect to the sulfur removal efficiency.

### Comparative Example 1

Reference is made to Example of patent US5807410.
A process gas of 138 °C was cooled to 105 °C inside the 33 tubes with a length of 2.3 m and inner diameter of 45 mm of a heat exchanger while the tubes were kept at 76 °C with cooling air. The Reynolds number of the gas was 11300, at a velocity of 5 m/s. The sulfur removal was 92%.

### Comparative Example 2

A commercial pilot unit of patent US5807410 and US5897850 was constructed. Data of performance test runs on this unit after a few years of operation are listed in Table 3.

**Table 3**

| | Velocity | Reynolds number | Sulfur Removal [%] |
|---|---|---|---|
| | [m/s] | [-] | |
| Testrun 1 | 5.9 | 10693 | 49 |
| Testrun 2 | 4.4 | 7879 | 70 |

It was observed during inspection that the inlet of a number of tubes were blocked by elemental sulfur as a result of the tubesheet temperature being below the sulfur solidification temperature.

The results illustrate the benefit of a lower gas velocity and correspondingly lower Reynolds number.

## Claims

1. Process for the recovery of elemental sulfur from a sulfur-containing gas stream comprising leading said sulfur-containing gas stream over a flow path through a shell and tube heat exchanger that comprises a shell defining a recovery chamber and tubes through which a cooling fluid is led, and cooling said stream to a temperature below the solidification temperature of elemental sulfur to obtain solidified elemental sulfur, wherein said sulfur-containing gas stream is led over the flow path with a flow that is essentially laminar over essentially the entire length of the flow path, and wherein said flow path of the said sulfur-containing gas stream is located in said recovery chamber around said tubes.

2. Process according to the previous claim, wherein the tubes are positioned substantially parallel to each other and which longitudinal direction is essentially perpendicular to the flow path of the sulfur-containing gas stream in the recovery chamber.

3. Process according to any of the previous claims, wherein said tubes comprise a cooling surface area that is at least in part formed by outwardly extending projections, preferably fins, that are extending away from the tube into the flow path of the of the sulfur-containing gas stream in the recovery chamber.

4. Process according to any of the previous claims, wherein the cooling surface area increases over the length of the flow path, preferably wherein the number of the outwardly extending projections per surface area increases over the length of the flow path.

5. Process according to any of the previous claims, wherein the cooling fluid in all tubes in the recovery chamber is maintained at essentially the same temperature with a tolerable deviation of ± 10 °C, preferably ± 5 °C.

6. Process according to any of the previous claims, wherein said shell and tube heat exchangers comprises two or more sections in the flow direction of the flow path, wherein each section comprises a part of the recovery chamber and said tubes, and wherein in each section independently, the cooling fluid or a heating fluid to liquify solidified elemental sulfur flows.

7. Process according to any of the previous claims, wherein the flow of said sulfur-containing gas stream over the flow path has a Reynolds number Re of less than 2000, preferably less than 1800, more preferably less than 1500, even more preferably less than 1000, most preferably less than 500.

8. Process according to any of the previous claims, wherein the flow of said sulfur-containing gas stream over the flow path has a gas velocity in the range of 0.05 to 5 m/s, preferably 0.1 to 1 m/s.

9. Process according to any of the previous claims, wherein said sulfur-containing gas stream in the shell and tube heat exchanger is cooled to a temperature in between the dew point of water and the solidification temperature of elemental sulfur, preferably between 90 °C and 114.9 °C, more preferably between 100 °C and 110 °C.

10. Process according to any of the previous claims, wherein sulfur-containing gas stream comprises tail gas from a Claus process.

11. Apparatus for the recovery of elemental sulfur with a process according to any of the previous claims, said apparatus comprising a shell and tube heat exchanger that comprises a shell defining a recovery chamber and one or more tubes for leading a cooling fluid, wherein
- the tubes are positioned substantially parallel in the recovery chamber;
- a flow path for a sulfur-containing stream is provided around the tubes and perpendicular to the longitudinal direction of the tubes;
- said tubes comprise a cooling surface area that is at least in part formed by outwardly extending projections, preferably fins, that are extending away from the tube into the flow path of the sulfur-containing gas stream in the recovery chamber;
- the cooling surface area increases over the length of the flow path.

12. Apparatus according to the previous claim, wherein the number of the outwardly extending projections per surface area increases over the length of the flow path.

13. Apparatus according to any of claims 11-12, wherein said shell and tube heat exchanger comprises two or more sections in the flow direction of the flow path, wherein each section comprises a part of the recovery chamber and said tubes, and the apparatus is configured such that for each section independently, the tubes can lead a cooling fluid or a heating fluid.

14. Apparatus according to any of claims 11-13 that is positioned after a Claus plant to receive a tail gas stream originating from said Claus plant.

## Patentansprüche

1. Verfahren zur Rückgewinnung von elementarem Schwefel aus einem schwefelhaltigen Gasstrom, umfassend Führen des schwefelhaltigen Gasstroms über einen Strömungsweg durch einen Rohrbündelwärmetauscher, der ein eine Rückgewinnungskammer definierendes Gehäuse und Rohre umfasst, durch die eine Kühlflüssigkeit geleitet wird, und Kühlen des Stroms auf eine Temperatur unterhalb der Erstarrungstemperatur von elementarem Schwefel, um erstarrten elementaren Schwefel zu erhalten, wobei der schwefelhaltige Gasstrom über den Strömungsweg mit einer Strömung geführt wird, die im Wesentlichen über die gesamte Länge des Strömungswegs laminar ist, und wobei der Strömungsweg des schwefelhaltigen Gasstroms in der Rückgewinnungskammer um die Rohre verortet ist.

2. Verfahren nach dem vorstehenden Anspruch, wobei die Rohre im Wesentlichen parallel zueinander angeordnet sind und die Längsrichtung im Wesentlichen senkrecht zum Strömungsweg des schwefelhaltigen Gasstroms in der Rückgewinnungskammer ist.

3. Verfahren nach einem der vorstehenden Ansprüche, wobei die Rohre eine Kühloberfläche umfassen, die zumindest teilweise durch sich nach außen erstreckende Vorsprünge, vorzugsweise Rippen, gebildet ist, die sich vom Rohr weg in den Strömungsweg des schwefelhaltigen Gasstroms in der Rückgewinnungskammer erstrecken.

4. Verfahren nach einem der vorstehenden Ansprüche, wobei die Kühloberfläche über die Länge des Strömungsweges zunimmt, vorzugsweise wobei die Anzahl der sich nach außen erstreckenden Vorsprünge pro Oberfläche über die Länge des Strömungsweges zunimmt.

5. Verfahren nach einem der vorstehenden Ansprüche, wobei die Kühlflüssigkeit in allen Rohren in der Rückgewinnungskammer im Wesentlichen auf der gleichen Temperatur mit einer tolerierbaren Abweichung von ± 10 °C, vorzugsweise ± 5 °C, gehalten wird.

6. Verfahren nach einem der vorstehenden Ansprüche, wobei der Rohrbündelwärmetauscher zwei oder mehr Abschnitte in der Strömungsrichtung des Strömungsweges umfasst, wobei jeder Abschnitt einen Teil der Rückgewinnungskammer und die Rohre umfasst und wobei in jedem Abschnitt unabhängig die Kühlflüssigkeit oder eine Heizflüssigkeit fließt, um erstarrten elementaren Schwefel zu verflüssigen.

7. Verfahren nach einem der vorstehenden Ansprüche, wobei die Strömung des schwefelhaltigen Gasstroms über den Strömungsweg eine Reynolds-Zahl Re von weniger als 2000, vorzugsweise weniger als 1800, bevorzugter weniger als 1500, noch bevorzugter weniger als 1000, am meisten bevorzugt weniger als 500 hat.

8. Verfahren nach einem der vorstehenden Ansprüche, wobei die Strömung des schwefelhaltigen Gasstroms über den Strömungsweg eine Gasgeschwindigkeit in dem Bereich von 0,05 bis 5 m/s, vorzugsweise 0,1 bis 1 m/s, hat.

9. Verfahren nach einem der vorstehenden Ansprüche, wobei der schwefelhaltige Gasstrom in dem Rohrbündelwärmetauscher auf eine Temperatur zwischen dem Taupunkt von Wasser und der Erstarrungstemperatur von elementarem Schwefel, vorzugsweise zwischen 90 °C und 114,9 °C, bevorzugter zwischen 100 °C und 110 °C, abgekühlt wird.

10. Verfahren nach einem der vorstehenden Ansprüche, wobei der schwefelhaltige Gasstrom Abgas aus einem Claus-Prozess umfasst.

11. Gerät zur Rückgewinnung von elementarem Schwefel mit einem Verfahren nach einem der vorstehenden Ansprüche, das Gerät umfassend einen Rohrbündelwärmetauscher, der ein eine Rückgewinnungskammer definierendes Gehäuse und ein oder mehrere Rohre zum Führen einer Kühlflüssigkeit umfasst, wobei
- die Rohre im Wesentlichen parallel in der Rückgewinnungskammer angeordnet sind;
- ein Strömungsweg für einen schwefelhaltigen Strom um die Rohre herum und senkrecht zur Längsrichtung der Rohre vorgesehen ist;
- die Rohre eine Kühloberfläche umfassen, die zumindest teilweise durch sich nach außen erstreckende Vorsprünge, vorzugsweise Rippen, gebildet ist, die sich von dem Rohr weg in den Strömungsweg des schwefelhaltigen Gasstroms in der Rückgewinnungskammer erstrecken;
- die Kühloberfläche über die Länge des Strömungsweges zunimmt.

12. Gerät nach dem vorstehenden Anspruch, wobei die Anzahl der sich nach außen erstreckenden Vorsprünge pro Oberfläche über die Länge des Strömungsweges zunimmt.

13. Gerät nach einem der Ansprüche 11 - 12, wobei der Rohrbündelwärmetauscher zwei oder mehr Abschnitte in Strömungsrichtung des Strömungsweges umfasst, wobei jeder Abschnitt einen Teil der Rückgewinnungskammer und die Rohre umfasst, und das Gerät so konfiguriert ist, dass die Rohre für jeden Abschnitt unabhängig eine Kühlflüssigkeit oder eine Heizflüssigkeit führen können.

14. Gerät nach einem der Ansprüche 11 - 13, die hinter einer Claus-Anlage angeordnet ist, um einen aus der Claus-Anlage stammenden Endgasstrom aufzunehmen.

## Revendications

1. Procédé pour la récupération de soufre élémentaire à partir d'un courant de gaz contenant du soufre, comprenant l'amenée dudit courant de gaz contenant du soufre sur un trajet d'écoulement à travers un échangeur de chaleur à faisceau tubulaire qui comprend une gaine définissant une chambre de récupération et des tubes à travers lesquels un fluide de refroidissement est amené, et le refroidissement dudit courant à une température inférieure à la température de solidification du soufre élémentaire pour que soit obtenu du soufre élémentaire solidifié, dans lequel ledit courant de gaz contenant du soufre est amené sur le trajet d'écoulement avec un écoulement qui est pratiquement laminaire sur pratiquement toute la longueur du trajet d'écoulement, et dans lequel ledit trajet d'écoulement dudit courant de gaz contenant du soufre est situé dans ladite chambre de récupération autour desdits tubes.

2. Procédé selon la revendication précédente, dans lequel les tubes sont positionnés pratiquement parallèles les uns aux autres et leur direction longitudinale est pratiquement perpendiculaire au trajet d'écoulement du courant de gaz contenant du soufre dans la chambre de récupération.

3. Procédé selon l'une quelconque des revendications précédentes, dans lequel lesdits tubes comprennent une surface de refroidissement qui est au moins en partie formée par des saillies s'étendant vers l'extérieur, de préférence des ailettes, qui s'étendent en s'éloignant du tube dans le trajet d'écoulement du courant de gaz contenant du soufre dans la chambre de récupération.

4. Procédé selon l'une quelconque des revendications précédentes, dans lequel la surface de refroidissement augmente sur la longueur du trajet d'écoulement, de préférence dans lequel le nombre des saillies s'étendant vers l'extérieur par unité de surface augmente sur la longueur du trajet d'écoulement.

5. Procédé selon l'une quelconque des revendications précédentes, dans lequel le fluide de refroidissement dans tous les tubes dans la chambre de récupération est maintenu pratiquement à la même température avec un écart tolérable de ± 10°C, de préférence de ± 5°C.

6. Procédé selon l'une quelconque des revendications précédentes, dans lequel lesdits échangeurs de chaleur à faisceau tubulaire comprennent deux ou plus de deux sections dans la direction d'écoulement du trajet d'écoulement, dans lequel chaque section comprend une partie de la chambre de récupération et desdits tubes, et dans lequel, dans chaque section indépendamment, le fluide de refroidissement ou un fluide de chauffage pour liquéfier le soufre élémentaire solidifié circule.

7. Procédé selon l'une quelconque des revendications précédentes, dans lequel l'écoulement dudit courant de gaz contenant du soufre sur le trajet d'écoulement a un nombre de Reynolds Re inférieur à 2000, de préférence inférieur à 1800, mieux encore inférieur à 1500, plus particulièrement inférieur à 1000, tout spécialement inférieur à 500.

8. Procédé selon l'une quelconque des revendications précédentes, dans lequel l'écoulement dudit courant de gaz contenant du soufre sur le trajet d'écoulement a une vélocité de gaz située dans la plage allant de 0,05 à 5 m/s, de préférence de 0,1 à 1 m/s.

9. Procédé selon l'une quelconque des revendications précédentes, dans lequel ledit courant de gaz contenant du soufre dans l'échangeur de chaleur à faisceau tubulaire est refroidi à une température comprise entre le point de rosée de l'eau et la température de solidification du soufre élémentaire, de préférence entre 90°C et 114,9°C, mieux encore entre 100°C et 110°C.

10. Procédé selon l'une quelconque des revendications précédentes, dans lequel le courant de gaz contenant du soufre comprend un gaz de queue d'un procédé Claus.

11. Appareil pour la récupération de soufre élémentaire avec un procédé selon l'une quelconque des revendications précédentes, ledit appareil comprenant un échangeur de chaleur à faisceau tubulaire qui comprend une gaine définissant une chambre de récupération et un ou plusieurs tubes pour amener un fluide de refroidissement, dans lequel
- les tubes sont positionnés pratiquement parallèles dans la chambre de récupération ;
- un trajet d'écoulement pour un courant contenant du soufre est disposé autour des tubes et perpendiculaire à la direction longitudinale des tubes ;
- lesdits tubes comprennent une surface spécifique de refroidissement qui est au moins en partie formée par des saillies s'étendant vers l'extérieur, de préférence des ailettes, qui s'étendent en s'éloignant du tube dans le trajet d'écoulement du courant de gaz contenant du soufre dans la chambre de récupération ;
- la surface de refroidissement augmente sur la longueur du trajet d'écoulement.

12. Appareil selon la revendication précédente, dans lequel le nombre des saillies s'étendant vers l'extérieur par unité de surface augmente sur la longueur du trajet d'écoulement.

13. Appareil selon l'une quelconque des revendications 11 et 12, dans lequel ledit échangeur de chaleur à faisceau tubulaire comprend deux ou plus de deux sections dans la direction d'écoulement du trajet d'écoulement, dans lequel chaque section comprend une partie de la chambre de récupération et desdits tubes, et lequel appareil est configuré de façon que, pour chaque section indépendamment, les tubes puissent amener un fluide de refroidissement ou un fluide de chauffage.

14. Appareil selon l'une quelconque des revendications 11 et 13, qui est positionné après une usine Claus pour recevoir un courant de gaz de queue provenant de ladite usine Claus.
